# EUROPÄISCHE PATENTANMELDUNG

(11) **EP 1 155 728 A1**
(43) Veröffentlichungstag der Anmeldung: **21.11.2001**
(21) Anmeldenummer: 01110121.9
(22) Anmeldetag: 03.05.2001
(51) Int. Cl.: B01D 53/02

(54) **Verfahren zur Gasadsorption mittels aminomethylierter Perlpolymerisate**

(30) Priorität: 16.05.2000 DE 10023970
(71) Anmelder: BAYER AG, 51368 Leverkusen (DE)
(72) Erfinder: Wagner, Rudolf, Dr., 51061 Köln (DE); Schnegg, Ulrich, Dr., 51377 Leverkusen (DE); Wambach, Wolfgang, Dr., 51065 Köln (DE); Klipper, Reinhold, Dr., 50933 Köln (DE)

(57) **Zusammenfassung**

Die vorliegende Erfindung betrifft ein Verfahren zur Gasadsorption, insbesondere von sauren Gasen mittels monodisperser aminomethylierter Perlpolymerisate.

## Beschreibung

Die vorliegende Erfindung betrifft ein Verfahren zur Gasadsorption, insbesondere von sauren Gasen mittels monodisperser aminomethylierter Perlpolymerisate.

Unter aminomethylierten Perlpolymerisaten im Sinne der vorliegenden Erfindung werden Perlpolymerisate verstanden, die nach dem Phthalimid-Verfahren oder nach dem Chlormethylierungsverfahren hergestellt werden. Beim Chlormethylierungsverfahren wird das intermediär erzeugte Chlormethylat mit Urotropin und anschließend mit Säure zu einem aminomethylierten Perlpolymerisat umgesetzt.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt. Beispielsweise liegen dann bei einem Perlpolymerisat, dessen Kügelchen einen häufigsten Durchmesser von 0,50 mm aufweisen, mindestens 90 Volumen- oder Massen-% in einem Größenintervall zwischen 0,45 mm und 0,55 mm, oder bei einem Perlpolymerisat, dessen Kügelchen einen häufigsten Durchmesser von 0,70 mm aufweisen mindestens 90 Volumen- oder Massen-% in einem Größenintervall zwischen 0,77 mm und 0,63 mm. Die vorliegende Erfindung betrifft die Verwendung von Perlpolymerisaten deren monodisperse Eigenschaft im Herstellungsprozess begründet liegt, also erhältlich durch Jetten, seed/feed oder Direktverdüsung, Diese Verfahren werden beispielsweise in US 3 922 255, US 4 444 961 und US 4 427 794 beschrieben.

Aus DE 19 830 470 Cl ist ein regeneratives Verfahren zur CO₂-Adsorption bekannt, wobei ein makroporöses Ionenaustauscherharz einem CO₂ enthaltenden Medium ausgesetzt wird. Dieses Ionenaustauscherharz besteht aus Vinylbenzol-Polymeren, die mit Divinylbenzol vernetzt sind und enthält primäre Benzylamine als funktionelle Gruppen.

Die gemäß dem Stand der Technik einzusetzenden Ionenaustauscher werden gemäß DE-OS 2 519 244 hergestellt. Nachteilig an dem Verfahren gemäß DE 19 830 470 C1 ist die Tatsache, dass es sich dabei um heterodisperse Ionenaustauscher handelt die aufgrund ihrer Morphologie unterschiedliche Perlengrößen, geringere Porosität und zumeist kleine Porendurchmesser aufweisen.

Es bestand daher die Aufgabe neue Ionenaustauscher zur Gasadsorption zu entwickeln, die die oben genannten Nachteile des Standes der Technik nicht aufweisen und deshalb universeller einsetzbar sind.

Aus DE-A 19 940 864 ist ein Verfahren zur Herstellung monodisperser Anionenaustauscher bekannt.

Dabei werden
a) Monomertröpfchen aus mindestens einer monovinylaromatischen Verbindung und mindestens einer polyvinylaromatischen Verbindung sowie gegebenenfalls einem Porogen und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umgesetzt und
d) schließlich das aminomethylierte Perlpolymerisat alkyliert.

Es wurde nun herausgefunden, dass die aminomethylierten Verfahrensprodukte aus Verfahrensschritt c) sich überraschend gut zur Gasadsorption eignen.

Die vorliegende Erfindung betrifft daher ein Verfahren zur Adsorption von Gasen in offenen, geschlossenen oder teilgeschlossenen Systemen oder Räumen, dadurch gekennzeichnet, dass man monodisperse, aminomethylierte Perlpolymerisate auf Basis mindestens einer monovinylaromatischen Verbindung und mindestens einer polyvinylaromatischen Verbindung mit einer Porosität von 40 bis 70 %, hergestellt nach einem Verfahren gemäß den Verfahrensschritten a), b) und c) der DE-A 19 940 864 einsetzt.

In Verfahrensschritt a) der DE-A 19 940 864 wird mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der DE-A 19 940 864 werden in Verfahrensschritt a) bevorzugt monoethylenisch ungesättigte Verbindungen wie beispielsweise Styrol, Vinyltoluol, Ethylstyrol, α-Methylstyrol, Chlorstyrol, Chlormethylstyrol, Acrylsäurealkylester und Methacrylsäurealkylester eingesetzt.

Besonders bevorzugt wird Styrol oder Mischungen aus Styrol mit den vorgenannten Monomeren eingesetzt.

Bevorzugte polyvinylaromatische Verbindungen im Sinne der DE-A 19 940 864 sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die polyvinylaromatischen Verbindungen werden im allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats als Gasadsorber ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

Die Menge in Gew.-% an polyvinylaromatischen Verbindungen in der Monomermischung wird als Vernetzungsgrad angegeben.

In einer bevorzugten Ausführungsform kommen in Verfahrensschritt a) der DE-A 19 940 864 mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der DE-A 19 940 864 werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethylhexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im kugelförmigen Polymerisat eine makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden.

Bevorzugte Perlpolymerisate im Sinne der DE-A 19 940 864, hergestellt durch Verfahrensschritt a), weisen eine makroporöse Struktur auf.

Die Ausbildung monodisperser, makroporöser Perlpolymerisate kann beispielsweise durch Zusatz von Inertmaterialien (Porogene)zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe. Beispielsweise können als Porogen Alkohole mit 4 bis 10 Kohlenstoffatomen zur Herstellung monodisperser, makroporöser Perlpolymerisate auf Styrol/Divinylbenzol-Basis eingesetzt werden. In DE-A 19 940 864 werden zu diesem Aspekt zahlreiche Literaturhinweise aufgeführt.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teilchengröße der gegebenenfalls verkapselten Monomertröpfchen beträgt 10 - 4000 µm, vorzugsweise 100 - 1000 µm. Das Verfahren gemäß DE-A 19 940 864 ist daher insbesondere zur Herstellung monodisperser kugelförmiger Polymerisate geeignet, die im Rahmen der vorliegenden Erfindung zur Gasadsorption eingesetzt werden.

Bei der Herstellung der monodispersen Perlpolymerisate gemäß DE-A 19 940 864 Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 -1000 ppm (bezogen auf die wässrige Phase), vorzugsweise 10 - 500 ppm, besonders bevorzugt 10 - 250 ppm.

Die Polymerisation der gegebenenfalls mikroverkapselten Monomertröpfchen zum kugelförmigen, monodispersen Perlpolymerisat erfolgt, wie bereits erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestem. Sehr gut geeignet sind auch Cellulosederivate, insbesondere Celluloseester und Celluloseether, wie Carboxymethylcellulose Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum kugelförmigen, monodispersen Perlpolymerisat gemäß DE-A 19 940 864 kann in Verfahrensschritt a) gegebenenfalls auch in Anwesenheit eines Puffersystems durchgeführt werden. Bevorzugt werden Puffersysteme, die den pH-Wert der wässrigen Phase zu Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phoshats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. In einer bevorzugten Ausführungsform kann die Polymerisation in einer prozessgesteuerten Anlage durchgeführt werden. Nach der Polymerisation wird das Polymerisat mit üblichen Methoden, beispielsweise durch Filtrieren oder Dekantieren, isoliert und gegebenenfalls gewaschen.

Im Verfahrensschritt b) gemäß DE-A 19 940 864 wird zunächst das Amidomethylierungsreagens hergestellt. Dazu wird beispielsweise ein Phthalimid oder ein Phthalimidderivat in einem Lösungsmittel gelöst und mit Formalin versetzt. Anschließend wird unter Wasserabspaltung hieraus ein Bis(phthalimido)ether gebildet. Bevorzugte Phthalimidderivate im Sinne der DE-A 19 940 864 sind Phthalimid selber oder substituierte Phthalimide, beispielsweise Methylphthalimid.

Als Lösungsmittel kommen im Verfahrensschritt b) gemäß DE-A 19 940 864 inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) gemäß DE-A 19940 864 wird das Perlpolymerisat mit Phthalimidderivaten kondensiert. Als Katalysator wird dabei Oleum, Schwefelsäure oder Schwefeltrioxid eingesetzt.

Verfahrensschritt b) gemäß DE-A 19 940 864 wird bei Temperaturen zwischen 20 bis 120°C, bevorzugt 50 bis 100°C, besonders bevorzugt 60 bis 90°C durchgeführt.

Die Abspaltung des Phthalsäurerestes und damit die Freilegung der Aminomethylgruppe erfolgt in DE-A 19 940 864 im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Bevorzugte Parameter der monodispersen, aminomethylierten Perlpolymerisate gemäß Verfahrensschritt c) der DE-A 19 940 864 in der Verwendung als Gasadsorbentien sind:
- ein hoher Vernetzungsgrad von 2 bis 90 %, bevorzugt von 2 bis 60 %, besonders bevorzugt von 2 bis 20 %,
- eine Porosität der monodispersen aminomethylierten Perlpolymerisate die zwischen 40 und 60 %, bevorzugt zwischen 45 und 55 % liegt,
- eine Konzentration der funktionellen Gruppen zwischen 0,2 und 3,0 mol/l, bevorzugt zwischen 1,5 und 2,5 mol/l Perlpolymerisat,
- ein mittlerer Porendurchmesser zwischen 100 und 900 Angström, bevorzugt zwischen 300 und 550 Angström.

In einer vorteilhaften Ausführung wird das monodisperse, aminomethylierte Perlpolymerisat dem zu adsorbierenden Gas bzw. Gasgemisch d.h. der in offenen, geschlossenen und teilgeschlossenen Räumen vorhandenen Atemluft ausgesetzt, indem die Luft mittels eines Lüfters oder durch Einatmen durch eine Perlpolymerisatschüttung geführt wird. Beim Durchströmen der Schüttung werden die Gas-Moleküle an den funktionellen Aminogruppen auf den äußeren und den inneren Oberflächen der monodispersen, makroporösen Harzkügelchen (Durchmesser typischerweise im Bereich von 400 bis 600 µ) gebunden und das durchströmende Medium wird entsprechend abgereichert.

Die Regeneration des monodispersen aminomethylierten Perlpolymerisates nach Sättigung mit sauren Gasen kann auf mehrere Weisen erfolgen; die Wahl der Regenerationsart hängt dabei vom aktuellen Anwendungsfall und von anderen technischen sowie logistischen Randbedingungen ab:
- Regeneration des monodispersen aminomethylierten Perlpolymerisates nach Sättigung mit sauren Gasen durch Applikation von Wasserdampf und dadurch bedingter Austreibung des adsorbierten Gases.
- Regeneration des monodispersen aminomethylierten Perlpolymerisates nach Sättigung mit sauren Gasen durch Applikation eines Unterdrucks mit oder ohne zusätzlicher Applikation von Wärme (z.B. als Wasserdampf) und/oder heißen Gasen wie Stickstoff, Luft oder inerten Gasen wie beispielsweise Helium oder Argon und dadurch bedingter Austreibung des adsorbierten Gases.
- Regeneration des monodispersen aminomethylierten Perlpolymerisates nach Sättigung mit sauren Gasen durch Applikation von erwärmter oder nicht erwärmter CO₂ freier Luft und dadurch bedingter Austreibung des adsorbierten Gases.

Bevorzugte Anwendungsgebiete sind die Adsorption von Gasen in Lebenserhaltungssystemen für Raumfahrzeuge, Gebäude, Anlagen oder Fahrzeuge, beispielsweise in Unterseebooten, Klimakontrolle in Flugzeugen, Bergwerken oder chemischen Betrieben sowie Atemgeräten und Lebenserhaltungssystemen im medizinischen Bereich und in Taucherausrüstungen.

Weitere Anwendungsgebiete im Sinne der vorliegenden Erfindung sind die Adsorption von chemischen Gasen in Atemschutzmasken zur Verwendung in Bereichen wo entsprechende Gase auftreten können, beispielsweise in chemischen Betrieben.

Gegenstand der vorliegenden Erfindung sind aber auch Atemschutzmasken, Schutzanzüge und Lebenserhaltungssysteme, die mit einer ausreichenden Menge Schüttgut aus monodispersen aminomethylierten Perlpolymerisaten ausgestattet sind, um saure Gase oder organische Gase oder Dämpfe wie beispielsweise Formaldehyd über einen längeren Zeitraum hinweg zu adsorbieren.

Zu adsorbierende Gase im Sinne der vorliegenden Erfindung sind insbesondere saure Gase wie beispielsweise Kohlenmonoxid (CO), natürliches oder metabolisch produziertes Kohlendioxid (CO₂), nitrose Gase wie beispielsweise NO, NO₂, N₂O, N₂O₅, Schwefeloxide wie beispielsweise SO₂ oder SO₃, gasförmige Halogenwasserstoffe wie beispielsweise HCl, HBr aber auch H₂S, Dicyan, Phosgen oder organische Gase wie beispielsweise Formaldehyd oder organische Dämpfe von beispielsweise Alkoholen, Ketonen, Halogenkohlenwasserstoffen etc., beispielsweise Methanoldämpfe, Acetondämpfe etc.

### Beispiele

### Beispiel 1

### a) Herstellung des monodispersen, makroporösen Perlpolymerisates auf der Basis von Styrol, Divinylbenzol und Ethylstyrol

In einem 10 1 Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 um, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2400 ml Dichlorethan, 595 g Phthalimid und 413 g 30,0 gew.-%iges Formalin vorgelegt.Der pH Wert der Suspension wird mit Natronlauge auf 5,5 bis 6 eingestellt. Anschließend wird das Wasser destillativ entfernt. Dann werden 43,6 g Schwefelsäure zudosiert. Das entstehende Wasser wird destillativ entfernt. Der Ansatz wird abgekühlt. Bei 30°C wird 174,4 g 65 %iges Oleum zudosiert, anschließend 300,0 g monodisperses Perlpolymerisat gemäß Verfahrensschritt 1a). Die Suspension wird auf 70°C erhitzt und weitere 6 Stunden bei dieser Temperatur gerührt. Die Reaktionsbrühe wird abgezogen, vollentsalztes Wasser wird zudosiert und Restmengen an Dichlorethan werden destillativ entfernt.
Ausbeute an amidomethyliertem Perlpolymerisat: 1820 ml
Elementaranalytische Zusammensetzung: Kohlenstoff : 75,3 Gew.-%; Wasserstoff: 4,6 Gew.-%; Stickstoff: 5,75 Gew.-%.

### 1c) Herstellung des aminomethylierten Perlpolymerisates

Zu 1770 ml amidomethyliertem Perlpolymerisat aus Beispiel 1b) werden 851 g 50 gew.-%ige Natronlauge und 1470 ml vollentsalztes Wasser bei Raumtemperatur hinzudosiert. Die Suspension wird auf 180°C erhitzt und 8 Stunden bei dieser Temperatur gerührt.

Das erhaltene Perlpolymerisat wird mit vollentsalztem Wasser gewaschen.
Ausbeute an aminomethyliertem Perlpolymerisat : 1530 ml
Als Gesamtausbeute - hochgerechnet - ergeben sich 1573 ml
Elementaranalytische Zusammensetzung: Kohlenstoff: 78,2 Gew.-%; Stickstoff: 12,25 Gew.-%; Wasserstoff: 8,4 Gew.-% .

Menge an Aminomethylgruppen in mol pro Liter aminomethyliertem Perlpolymerisat: 2,13

Menge an Aminomethylgruppen in mol in der Gesamtausbeute von aminomethyliertem Perlpolymerisat: 3,259

Im statistischen Mittel wurden pro aromatischem Kern, - herrührend aus den Styrol und Divinylbenzoleinheiten - 1,3 Wasserstoffatome durch Aminomethylgruppen substituiert.

### Porosität als Maß für die Adsorption eines Gases

Zur Bestimmung der Porosität eines makroporösen Perlpolymerisates wird mittels Quecksilberporosimetrie die Porenverteilung sowie das Porenvolumen der makroporösen Perlpolymerisate bestimmt.

Das Gesamtvolumen der Perlpolymerisate ist gleich dem Gesamtporenvolumen plus dem Feststoffvolumen.

Die Porosität in % ist gleich dem Quotienten aus dem Gesamtporenvolumen dividiert durch das Gesamtvolumen des Perlpolymerisates.

### Vergleichsbeispiel

Die monodispersen aminomethylierten Verfahrensprodukte aus Verfahrensschritt c) zeigen im Vergleich zum Stand der Technik - siehe DE 19 830 470 Cl - auf Grund der höheren Porosität eine überraschend deutlich höhere Adsorbtionsleistung für saure Gase wie beispielsweise Kohlenmonoxid (CO), natürliches oder metabolisch produziertes Kohlendioxid (CO₂) nitrose Gase, Schwefeloxide, gasförmige Halogenwasserstoffe, Dicyan, Phosgen aber auch bei organischen Gasen und Dämpfen wie Formaldehyd. Die monodispersen Verfahrensprodukte zeigen Porositätswerte im Bereich von 40 bis 60 %, die nach dem Stand der Technik hergestellten und in der DE 19 830 470 Cl verwendeten Perlpolymerisate zeigen Porositätswerte von 20 - 30 %. Überraschenderweise wurde gefunden, dass der Grad der Adsorption saurer Gase bzw. organischer Gase und Dämpfe am Perlpolymerisat mit zunehmender Porosität ansteigt.

## Patentansprüche

1. Verfahren zur Adsorption von Gasen in offenen, geschlossenen oder teilgeschlossenen Systemen oder Räumen, **dadurch gekennzeichnet, dass** man monodisperse aminomethylierte Perlpolymerisate auf Basis mindestens einer monovinylaromatischen Verbindung und mindestens einer polyvinylaromatischen Verbindung mit einer Porosität von 40 bis 60 % einsetzt.

2. Verfahren gemäß Anspruch 1, **dadurch gekennzeichnet, dass** der Vernetzungsgrad des monodispersen aminomethylierten Perlpolymerisats 2 bis 90 % beträgt.

3. Verfahren gemäß der Ansprüche 1 und 2, **dadurch gekennzeichnet, dass** der mittlere Porendurchmesser der monodispersen aminomethylierten Perlpolymerisate zwischen 100 und 900 Angström liegt.

4. Verfahren gemäß der Ansprüche 1 bis 3, **dadurch gekennzeichnet, dass** die Konzentration der funktionellen Gruppen des monodispersen aminomethylierten Perlpolymerisates zwischen 0,2 und 3,0 mol/l beträgt.

5. Verfahren nach einem der vorangehenden Ansprüche, **dadurch gekennzeichnet, dass** das monodisperse, aminomethylierte Perlpolymerisat in Form von Schüttgut eingesetzt wird.

6. Verwendung des Schüttguts gemäß Anspruch 5 zur Adsorption von sauren Gasen oder organischen Gasen oder Dämpfen.

7. Verwendung gemäß Anspruch 6, **dadurch gekennzeichnet, dass** saure Gase der Reihe CO, CO₂, NO, NO₂, N₂O, N₂O₅, SO₂, SO₃, HCl, HBr, H₂S, HCN, Dicyan, Phosgen oder organische Gase oder Dämpfe adsorbiert werden.

8. Verwendung des Schüttguts gemäß Anspruch 5 zur Gasadsorption in Lebenserhaltungssystemen für Raumfahrzeuge, Fahrzeuge, Gebäude, Anlagen, Flugzeuge, Bergwerke oder chemische Betriebe sowie in Atemgeräten und Lebenserhaltungssystemen im medizinischen Bereich und Taucherausrüstungen.

9. Verwendung des Schüttguts gemäß Anspruch 5 zur Gasadsorption in Atemschutzmasken, Schutzanzügen und Lebenserhaltungssystemen.

10. Atemschutzmasken, Schutzanzüge und Lebenserhaltungssysteme, **dadurch gekennzeichnet, dass** diese mit einer ausreichenden Menge an Schüttgut gemäß Anspruch 5 ausgestattet sind, um saure Gase oder organische Gase oder Dämpfe über einen längeren Zeitraum hinweg zu adsorbieren.

11. Verfahren zur Regenerierung der monodispersen, aminomethylierten Perlpolymerisate, **dadurch gekennzeichnet, dass** diese nach Sättigung mit sauren Gasen oder mit organischen Gasen oder Dämpfen
- durch Applikation von Wasserdampf bei atmosphärischen Bedingungen oder
- durch Applikation eines Unterdrucks mit oder ohne zusätzlicher Applikation von Wärme und/oder heißen Gasen wie Stickstoff, Luft oder inerten Gasen wie Helium oder Argon,
- durch Applikation von erwärmter oder nicht erwärmter CO₂ freier Luft
regeneriert werden.
